# FASCICULE DE BREVET EUROPEEN

(11) **EP 2 749 387 B1**
(45) Date de publication et mention de la délivrance du brevet: **20.04.2016**
(21) Numéro de dépôt: 13189971.8
(22) Date de dépôt: 23.10.2013
(51) Int. Cl.: B29C 45/77, B29C 33/00, B29C 45/00, B29C 45/76

(54) **Procédé d'injection plastique pour la fabrication d'une cuve de conteneur de collecte de déchets et moule mettant en oeuvre un tel procédé**
Spritzgiessprozess zum Herstellen eines Behälters und Werkzeug dafür
Injection moulding process for manufacturing a container and mould for making the same

(30) Priorité: 26.12.2012 FR 1262808
(43) Date de publication de la demande: 02.07.2014
(73) Titulaire: COMPAGNIE PLASTIC OMNIUM, 69007 Lyon (FR)
(72) Inventeur: Ducrocq, Isabelle, 38390 Bouvesse Quirieu (FR); Millet, Daniel, 01100 Belignat (FR); Silger, Joerg, 32257 Bünde (DE)
(74) Mandataire: Descazeaux, Charles

(56) Documents cités:
- DE-A1-102008 038 930
- FR-A1- 2 789 343
- JP-A- 2001 179 786
- NL-C1- 1 031 864
- US-A- 6 063 315
- US-A1- 2011 147 128

## Description

La présente invention se rapporte à la fabrication de conteneurs de collecte de déchets, et concerne plus particulièrement la fabrication de conteneurs en matière plastique.

Les conteneurs de collecte de déchet en matière plastique, dont le volume utile est compris aujourd'hui entre 60 litres et plus de 1100 litres, sont constitués principalement d'une cuve comportant une paroi de fond et des parois latérales. La cuve est en général pourvue d'un couvercle (souvent de type pivotant), et équipée de deux ou quatre roues dans le cas d'un conteneur roulant.

La cuve est conventionnellement obtenue par moulage par injection d'une matière plastique. La matière plastique chaude est injectée par l'intermédiaire d'une ou plusieurs buses disposées au niveau du fond de la cuve, le moule étant à température régulée. En raison des dimensions importantes de la cuve (selon le volume utile souhaité, celle-ci présente une hauteur proche d'un mètre, voire supérieure), la matière plastique chaude injectée doit s'écouler sur un long parcours pour que le remplissage complet du moule soit effectif. Comme dans tout procédé d'injection plastique, le remplissage correct du moule reste un objectif critique. Dans le cas présent, il est aujourd'hui nécessaire de prévoir des cuves d'épaisseur augmentée, non en raison de la résistance mécanique requise, mais pour favoriser un remplissage optimal du moule lors de leur fabrication. En effet, des épaisseurs trop faibles présentent le risque que la matière plastique se refroidisse prématurément au contact du moule, puis se fige, interrompant alors son écoulement. On comprend alors qu'augmenter les épaisseurs de la cuve (de manière inutile au vu de la résistance mécanique requise) implique un surcoût, notamment en raison de la matière supplémentaire utilisée pour chaque cuve, qu'il serait souhaitable de supprimer.

Une solution alternative à l'augmentation des épaisseurs consiste à augmenter la pression d'injection. Cette solution n'est en général pas économiquement viable car elle implique d'augmenter la pression d'injection des presses d'injection, qui sont des équipements très coûteux, mais également de prévoir des moules capables de résister à de telles pressions. Le coût global des équipements nécessaires dans ce cas fait que cette solution n'est en général pas retenue.

Une autre alternative, connue par exemple des documents FR 2789343A1, NL 1031864C1, US 2011/147128A1 et US 6063315A, consiste à injecter la matière plastique non pas via un unique point d'injection situé au niveau de la paroi de fond de la cuve, mais via quatre points d'injection, chaque point d'injection étant situé au niveau d'une des faces latérales de la cuve, à proximité d'une position transversale médiane de la paroi concernée. Dans cette configuration d'injection, le chemin à parcourir par la matière moindre, puisque chaque point d'injection se situe vers le milieu de la hauteur de la paroi correspondante, et non plus à une extrémité constituée par la paroi de fond.

Cependant si cette solution permet de résoudre partiellement le problème exposé ci-dessus, elle soulève d'autres inconvénients, bien plus importants. En effet, le moule utilisé pour la fabrication d'une cuve de conteneur telle que décrite plus haut comporte, de manière conventionnelle, une partie fixe, dite matrice et une partie mobile, dite poinçon. Le poinçon permet de générer la forme intérieure creuse de la cuve, et est à cet effet constitué d'une partie massive comportant une extrémité encastrée et une extrémité libre en porte-à-faux. Le porte-à-faux est très important car la distance entre l'extrémité encastrée du poinçon et son extrémité libre correspond à la distance entre la paroi de fond de la cuve et son extrémité ouverte, qui peut être par exemple comprise entre 860 et 1030 millimètres. Comme indiqué plus haut, cette distance peut dépasser un mètre.

Cette longueur de porte-à-faux génère un risque important pour la sécurité du moule. En effet, si l'une des buses d'injection ne s'ouvre pas correctement, ou de manière trop décalée (temporellement) par rapport aux autres buses, le poinçon peut subir alors des efforts fortement déséquilibrés entre ses différentes faces, et en particulier entre deux de ses faces opposées. Étant donné les pressions en jeu, ces efforts déséquilibrés conduisent facilement à la destruction du poinçon par rupture de celui-ci au niveau de son extrémité encastrée. Compte tenu du coût de ces équipements, on comprend naturellement que de telles conséquences doivent absolument être évitées.

La présente invention vise à remédier aux inconvénients exposés ci-dessus.

A cet effet, l'invention concerne un procédé d'injection plastique pour la fabrication d'une cuve de conteneur de collecte de déchets, la cuve comportant une paroi de fond et des parois latérales, le procédé étant caractérisé en ce qu'il comporte les étapes suivantes :
- injection simultanée de matière plastique au niveau d'au moins deux points d'injection, dits points d'injection latéraux, disposés en regard l'un de l'autre, situés chacun en un point de l'empreinte correspondant à l'une de deux faces latérales opposées de la cuve finie ;
- mesure, à intervalles temporels réguliers, de la pression dans l'empreinte à proximité de chacun des points d'injection ;
- déclenchement d'une procédure de sécurité si la différence de pression entre les points d'injection opposés dépasse un seuil prédéterminé.

Ainsi, grâce à la surveillance du différentiel de pression entre les faces latérales opposées, le procédé objet de la présente demande améliore la sécurité de la fabrication en permettant d'éviter qu'une anomalie survenant pendant l'injection de matière ne puisse conduire à la casse et à la perte d'un moule complet.

Dans une réalisation, l'étape d'injection simultanée est réalisée au moyen de quatre points d'injection opposés deux à deux.

Dans une réalisation, les points d'injections opposés sont commandés deux à deux de manière synchrone.

Dans une réalisation, l'étape d'injection simultanée est précédée d'une étape d'injection préalable au niveau d'un point d'injection, dit point d'injection primaire, disposé en un point de l'empreinte correspondant au fond de la cuve finie.

Dans une réalisation, l'injection simultanée est déclenchée lorsque le front de matière plastique provenant du point d'injection primaire se trouve à une distance prédéterminée des points d'injection latéraux.

Dans une réalisation, le front de matière provenant du point d'injection primaire est détecté au moyen d'au moins un capteur disposé à proximité des points d'injection latéraux.

Dans une réalisation, la distance prédéterminée est nulle, l'injection au niveau des points d'injection latéraux étant déclenchée lorsque le front de matière provenant du premier point d'injection atteint lesdits points d'injection latéraux.

Dans une réalisation, la procédure de sécurité comprend le déclenchement d'une alarme et/ou l'arrêt complet de l'injection.

Dans une réalisation, le seuil prédéterminé correspond à un différentiel d'environ 100 bars.

Dans une réalisation, l'intervalle de temps entre deux mesures de pression est de 1 milliseconde.

L'invention concerne également un moule mettant en oeuvre le procédé de fabrication défini ci-dessus.

L'invention sera mieux comprise à la lecture de la description détaillée, qui va suivre, d'un exemple de mise en oeuvre non limitatif, description faite en référence aux figures annexées, parmi lesquelles :
- la figure 1 est une vue schématique et partielle représentant une partie d'un moule destiné à réaliser un bac pour la collecte de déchets ;
- la figure 2 est une vue schématique représentant l'injection de la matière dans le cas d'un procédé mettant en oeuvre cinq points d'injection.

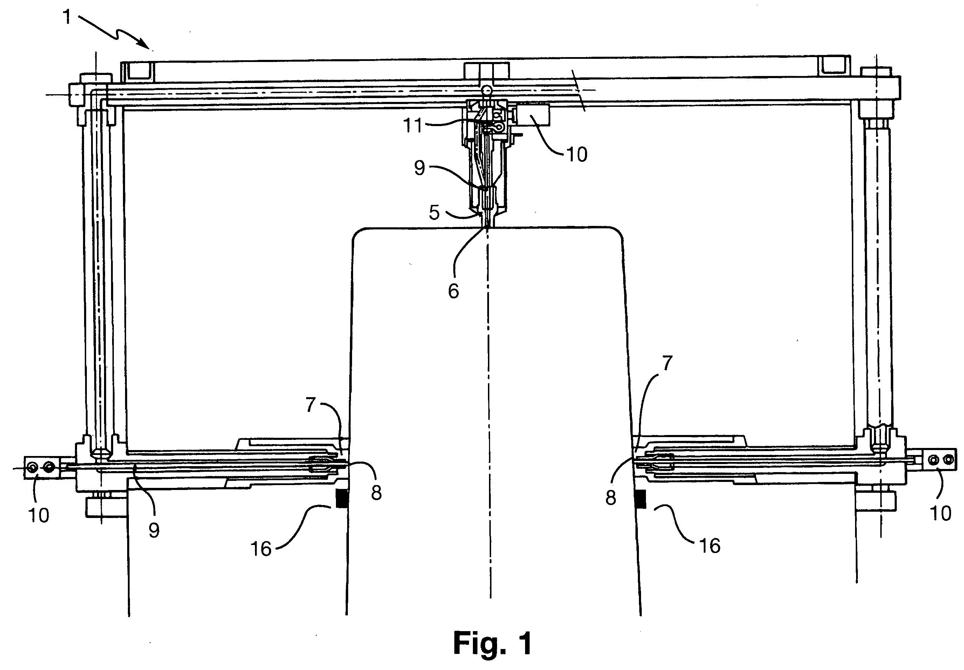

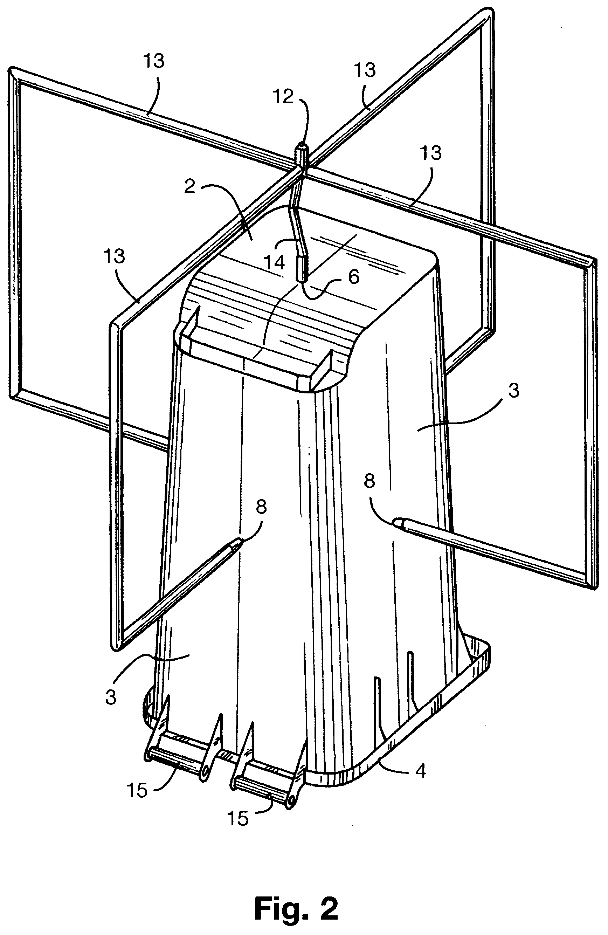

Le procédé et le moule objets de la présente demande permettent la réalisation d'un bac pour la collecte mécanisée des déchets, ce bac présentant un volume intérieur sensiblement parallélépipédique, de contenance typiquement supérieure ou égale à 60 litres. Dans l'exemple décrit, la cuve du bac comporte, comme on peut le voir sur la figure 2, une paroi de fond 2 et quatre parois latérales 3 terminées, à leur extrémité inférieure, par une collerette 4 définissant des moyens de préhension permettant à un véhicule de collecte de saisir le bac et de le vider. Des moyens sont également prévus pour le montage d'un couvercle (non représenté). Des poignées 15 sont réalisées. Des roues sont rapportées ultérieurement sur la paroi de fond 2 pour permettre de déplacer le bac par roulage, de manière conventionnelle. Le moule 1, représenté partiellement et schématiquement sur la figure 1 comporte une buse d'injection 5 débouchant en un point d'injection 6 situé au centre de la paroi de fond 2 et quatre buses d'injection 7 débouchant en des points d'injection 8 situés sensiblement au centre de chacune des quatre faces latérales 3. Dans le cas d'un moule comportant uniquement quatre points d'injection, celui-ci comportera uniquement les quatre buses d'injection 7 et ne comportera donc pas de point d'injection débouchant sur la paroi de fond 2.

Chacune des buses 5 et 7 comporte de façon connue en soi des moyens de chauffage permettant de maintenir la matière plastique à l'état fluide avant son injection dans la cavité destinée à la formation du bac. Cette cavité est délimitée du côté intérieur du bac par une contre-forme, ou poinçon, non représentée.

Chaque buse 5 ou 7 comprend en outre une tige d'obturation 9 (ou obturateur) associée à des moyens d'entraînement tel qu'un vérin hydraulique 10 permettant de la déplacer sélectivement entre une position d'obturation et une position d'ouverture, cette dernière position permettant à la matière plastique de s'écouler dans la cavité précitée. Les buses peuvent en outre être équipées chacune d'un capteur de fin de course permettant de contrôler la position de chaque obturateur. Dans le cas de la buse 5, la tige d'obturation 9 est commandée par l'intermédiaire d'un système de renvoi d'angle 11, pour des raisons d'encombrement. Comme illustré sur la figure 2, la matière plastique est envoyée dans le moule à partir d'une entrée 12 située en partie haute. La matière plastique est divisée en quatre flux 13 dirigés respectivement vers les buses 7 et un cinquième flux 14 dirigé vers la buse 5. Dans l'exemple de réalisation décrit, on commence par injecter la matière plastique par la buse 5 uniquement, pour réaliser la paroi de fond 2 et le début des faces latérales 3. Les buses 7 ne sont ouvertes, dans l'exemple de réalisation décrit, que lorsque la matière injectée par la buse 5 arrive à proximité des buses 7, le front de matière étant détecté grâce à un ou plusieurs capteur(s) adapté(s) (non représenté). L'air peut quitter la cavité du moule lors de son remplissage par la matière plastique par des évents non représentés.

Le moule objet de la présente demande est équipé, à proximité de chacune des buses 7 correspondant aux points d'injection latéraux, d'un capteur de pression 16. Conformément au procédé objet de la présente demande, ces capteurs de pression 16, au nombre de quatre, permettent de mesurer la pression à proximité de chacun des points d'injection latéraux et, ainsi, de pouvoir déterminer une différence de pression éventuelle entre deux faces latérales opposées. Selon le procédé objet de la présente demande, on effectue une mesure de pression et on calcule la différence de pression entre deux faces latérales opposées à intervalles réguliers, par exemple toutes les millisecondes. Si la différence de pression entre deux faces latérales opposées dépasse un seuil prédéterminé, par exemple 100 bar, une procédure de sécurité est alors déclenchée. Cette procédure de sécurité implique notamment l'arrêt immédiat de l'injection et la fermeture de toutes les buses. Bien entendu la valeur du seuil prédéterminé peut dépendre de plusieurs facteurs tels que notamment la taille du bac moulé (et donc la taille du moule), ou encore la matière utilisée, et notamment son grade. On utilise en effet pour réaliser le bac soit une matière plastique constituée en totalité ou en partie par de la matière plastique recyclée telle que du polyéthylène haute densité issu du recyclage et dont le grade peut descendre jusqu'à 0,3, soit du polyéthylène haute densité de grade 4. La pression d'injection sera plus élevée avec de la matière de grade faible.

Dans l'exemple de réalisation décrit, les tiges d'obturation des buses 7 situées sur des faces latérales opposées sont commandées simultanément en ouverture et en fermeture. Dans l'exemple décrit, les points d'injection 8 débouchent sur les côtés extérieurs des faces latérales 3, mais il est également possible de faire déboucher les points d'injection du côté intérieur des faces latérales du bac. Dans ce cas, les buses et les obturateurs associés (et éventuellement les capteurs de pressions) sont placés dans le poinçon, du côté intérieur du bac.

## Revendications

1. Procédé d'injection plastique pour la fabrication d'une cuve de conteneur de collecte de déchets, la cuve comportant une paroi de fond (2) et des parois latérales (3), le procédé étant **caractérisé en ce qu'**il comporte les étapes suivantes :
- injection simultanée de matière plastique au niveau d'au moins deux points d'injection (8), dits points d'injection latéraux, disposés en regard l'un de l'autre, situés chacun en un point de l'empreinte correspondant à l'une de deux faces latérales opposées de la cuve finie ;
- mesure, à intervalles temporels réguliers, de la pression dans l'empreinte à proximité de chacun des points d'injection (8) ;
- déclenchement d'une procédure de sécurité si la différence de pression entre les points d'injection opposés dépasse un seuil prédéterminé.

2. Procédé selon la revendication 1, dans lequel l'étape d'injection simultanée est réalisée au moyen de quatre points d'injection (8) opposés deux à deux.

3. Procédé selon la revendication 1 ou 2, dans lequel les points d'injections (8) opposés sont commandés deux à deux de manière synchrone.

4. Procédé selon la revendication 2 ou 3, dans lequel l'étape d'injection simultanée est précédée d'une étape d'injection préalable au niveau d'un point d'injection (6), dit point d'injection primaire, disposé en un point de l'empreinte correspondant au fond de la cuve finie.

5. Procédé selon la revendication précédente, dans lequel l'injection simultanée est déclenchée lorsque le front de matière plastique provenant du point d'injection (6) primaire se trouve à une distance prédéterminée des points d'injection (8) latéraux.

6. Procédé selon la revendication précédente, dans lequel le front de matière provenant du point d'injection (6) primaire est détecté au moyen d'au moins un capteur disposé à proximité des points d'injection (8) latéraux.

7. Procédé selon la revendication précédente, dans lequel la distance prédéterminée est nulle, l'injection au niveau des points d'injection (8) latéraux étant déclenchée lorsque le front de matière provenant du premier point d'injection (6) atteint lesdits points d'injection (8) latéraux.

8. Procédé selon l'une des revendications précédentes, dans lequel la procédure de sécurité comprend le déclenchement d'une alarme et/ou l'arrêt complet de l'injection.

9. Procédé selon l'une des revendications précédentes, dans lequel le seuil prédéterminé correspond à un différentiel d'environ 100 bars.

10. Procédé selon l'une des revendications précédentes, dans lequel l'intervalle de temps entre deux mesures de pression est de 1 milliseconde.

11. Moule (1) pour la fabrication d'une cuve de conteneur de collecte de déchets mettant en oeuvre le procédé de fabrication selon l'une des revendications précédentes, comportant au moins deux buses d'injection (7) débouchant en des points d'injection (8) situés sensiblement au centre d'au moins deux faces latérales (3) de la cuve, les points d'injection latéraux étant disposés en regard l'un de l'autre, et le moule étant équipé à proximité de chacune des buses (7) d'un capteur de pression (16) permettant de mesurer une pression à proximité de chacun des points d'injection (8).

## Patentansprüche

1. Verfahren zum Spritzgießen von Kunststoff zum Herstellen eines Trogs eines Behälters zum Sammeln von Abfällen, wobei der Trog eine Bodenwand (2) und Seitenwände (3) aufweist, wobei das Verfahren **dadurch gekennzeichnet ist, dass** es die folgenden Schritte umfasst:
- gleichzeitiges Einspritzen von Kunststoff im Bereich von mindestens zwei Einspritzpunkten (8), den so genannten seitlichen Einspritzpunkten, die einander gegenüber angeordnet sind und sich jeweils an einem Punkt der Formhöhlung befinden, der einer der zwei entgegengesetzten Seitenflächen des fertigen Trogs entspricht;
- Messen, in regelmäßigen zeitlichen Abständen, des Drucks in der Formhöhlung in der Nähe jedes der Einspritzpunkte (8);
- Auslösen eines Sicherheitsverfahrens, wenn der Druckunterschied zwischen den entgegengesetzten Einspritzpunkten einen vorbestimmten Schwellenwert übersteigt.

2. Verfahren nach Anspruch 1, bei dem der Schritt des gleichzeitigen Einspritzens mit Hilfe von vier Einspritzpunkten (8) ausgeführt wird, die paarweise entgegengesetzt sind.

3. Verfahren nach Anspruch 1 oder 2, bei dem die entgegengesetzten Einspritzpunkte (8) paarweise synchron gesteuert werden.

4. Verfahren nach Anspruch 2 oder 3, bei welchem dem Schritt des gleichzeitigen Einspritzens ein Schritt des vorherigen Einspritzens im Bereich eines Einspritzpunktes (6), dem so genannten primären Einspritzpunkt, vorangeht, der an einem Punkt der Formhöhlung angeordnet ist, der dem Boden des fertigen Trogs entspricht.

5. Verfahren nach dem vorhergehenden Anspruch, bei dem das gleichzeitige Einspritzen ausgelöst wird, wenn sich die Kunststoffstirnseite, die von dem primären Einspritzpunkt (6) stammt, in einem vorbestimmten Abstand von den seitlichen Einspritzpunkten (8) befindet.

6. Verfahren nach dem vorhergehenden Anspruch, bei dem die Kunststoffstirnseite, die von dem primären Einspritzpunkt (6) stammt, mit Hilfe mindestens eines Sensors detektiert wird, der in der Nähe der seitlichen Einspritzpunkten (8) angeordnet ist.

7. Verfahren nach dem vorhergehenden Anspruch, bei dem der vorbestimmte Abstand null ist, wobei das Einspritzen im Bereich der seitlichen Einspritzpunkte (8) ausgelöst wird, wenn die Kunststoffstirnseite, die von dem primären Einspritzpunkt (6) stammt, die seitlichen Einspritzpunkte (8) erreicht.

8. Verfahren nach einem der vorhergehenden Ansprüche, bei dem das Sicherheitsverfahren das Auslösen eines Alarms und/oder des vollständigen Anhaltens des Einspritzens umfasst.

9. Verfahren nach einem der vorhergehenden Ansprüche, bei dem der vorbestimmte Schwellwert einem Differential von etwa 100 bar entspricht.

10. Verfahren nach einem der vorhergehenden Ansprüche, bei dem das Zeitintervall zwischen zwei Druckmessungen 1 Millisekunde ist.

11. Formwerkzeug (1) zur Herstellung eines Trogs eines Behälters zum Sammeln von Abfällen, welches das Herstellungsverfahren nach einem der vorhergehenden Ansprüche verwendet, mit mindestens zwei Einspritzdüsen (7), die in Einspritzpunkten (8) ausmünden, die sich im Wesentlichen in der Mitte von mindestens zwei Seitenflächen (3) des Trogs befinden, wobei die seitlichen Einspritzpunkte einander gegenüber angeordnet sind und das Formwerkzeug in der Nähe jeder der Düsen (7) mit einem Drucksensor (16) zum Messen eines Drucks in der Nähe jeder der Einspritzpunkte (8) versehen ist.

## Claims

1. Plastic injection method for manufacturing a waste collection container vessel, the vessel having a bottom wall (2) and lateral walls (3), the method being **characterised in that** it comprises the following steps:
- simultaneously injecting plastic material through at least two injection points (8), called lateral injection points, arranged opposite one another, each located at a point of the cavity corresponding to one of the two opposite lateral sides of the finished vessel;
- measuring, at regular time intervals, the pressure in the cavity near each of the injection points (8);
- triggering a safety procedure if the pressure difference between the opposite injection points exceeds a predetermined threshold.

2. Method according to claim 1, wherein the simultaneous injection step is carried out through four injection points (8) opposite each other in pairs.

3. Method according to claim 1 or 2, wherein the opposite injection points (8) are controlled in pairs synchronously.

4. Method according to claim 2 or 3, wherein the simultaneous injection step is preceded by a step of preliminary injection through an injection point (6), called primary injection point, arranged at a point of the cavity corresponding to the bottom of the finished vessel.

5. Method according to the preceding claim, wherein the simultaneous injection is triggered when the front of plastic material from the primary injection point (6) is at a predetermined distance from the lateral injection points (8).

6. Method according to the preceding claim, wherein the front of material from the primary injection point (6) is detected by at least one sensor arranged near the lateral injection points (8).

7. Method according to the preceding claim, wherein the predetermined distance is zero, injection at the lateral injection points (8) being triggered when the front of material from the first injection point (6) reaches said lateral injection points (8).

8. Method according to one of the preceding claims, wherein the safety procedure comprises triggering an alarm and/or completely stopping the injection.

9. Method according to one of the preceding claims, wherein the predetermined threshold corresponds to a differential of approximately 100 bar.

10. Method according to one of the preceding claims, wherein the time interval between two pressure measurements is 1 millisecond.

11. Mould (1) for manufacturing a waste collection container vessel implementing the manufacturing process according to one of the preceding claims, including at least two injection nozzles (7) opening out at injection points (8) located substantially in the centre of at least two lateral sides (3) of the vessel, the lateral injection points being arranged opposite one another and the mould being equipped near each nozzle (7) with a pressure sensor (16) used to measure a pressure near each injection point (8).
